# FASCICULE DE BREVET EUROPEEN

(11) **EP 4 552 198 B1**
(45) Date de publication et mention de la délivrance du brevet: **02.09.2026**
(21) Numéro de dépôt: 23750648.0
(22) Date de dépôt: 05.07.2023
(51) Int. Cl.: H02J 1/10, H02J 4/00, H02J 13/00

(54) **SYSTÈME ÉLECTRIQUE POUR TURBOMACHINE**
ELEKTRISCHES SYSTEM FÜR EINEN TURBINENMOTOR
ELECTRICAL SYSTEM FOR A TURBINE ENGINE

(30) Priorité: 07.07.2022 FR 2206967
(43) Date de publication de la demande: 14.05.2025
(73) Titulaire: SAFRAN, 75015 Paris (FR)
(72) Inventeur: LIENHARDT, Anne Marie, 77550 MOISSY-CRAMAYEL (FR); BIDAN, Guillaume François Daniel, 77550 MOISSY-CRAMAYEL (FR); ROUGIER, Florent Jean-Arnaud, 77550 MOISSY-CRAMAYEL (FR)
(74) Mandataire: Regimbeau
(86) Numéro de dépôt international: PCT/FR2023/051029
(87) Numéro de publication internationale: WO 2024/009039

(56) Documents cités:
- EP-B1- 2 017 149
- CN-A- 108 691 653
- US-A1- 2017 297 732

## Description

### DOMAINE DE L'INVENTION

La présente demande concerne le domaine des turbomachines, en particulier des moteurs d'aéronef. Plus précisément, la présente demande concerne la gestion de l'alimentation de charges électriques d'un moteur et/ou d'un aéronef.

### ETAT DE LA TECHNIQUE

Un aéronef peut comprendre au moins un moteur et chacun du moteur et de l'aéronef peut comprendre des charges électriques et/ou des sources d'alimentation électrique. Un système électrique peut relier les charges, les sources et le moteur entre eux pour permettre des échanges électriques entre ces différents éléments. Les charges peuvent être alimentées par prélèvement mécanique sur le moteur, et le moteur peut être assisté par prélèvement électrique sur les sources, que ce soit en démarrage ou en vol. Au cours du fonctionnement du moteur, les besoins en alimentation des charges peuvent évoluer, parfois brusquement. D'un autre côté, le prélèvement mécanique sur le moteur doit respecter un certain nombre de contraintes pour assurer une optimisation du fonctionnement de ce-dernier. Par exemple, au décollage, il est préférable de limiter le prélèvement sur le corps basse pression du moteur, lequel est extrêmement sollicité pour fournir la poussée et ne peut se permettre, à cet égard, de connaître des oscillations de poussée liées à un prélèvement mécanique variable de la part du système électrique. Le document CN 108 691 653 A est un exemple d'art antérieur.

### EXPOSE DE L'INVENTION

Un but de l'invention est de permettre à un moteur d'aéronef de répondre à une sollicitation variable de charges électriques.

Il est à cet effet proposé, selon un aspect de la présente divulgation, un système électrique pour turbomachine comprenant :
un bus d'alimentation électrique prévu pour être relié à au moins une charge et configuré pour fournir une puissance électrique à la charge sous forme d'un signal continu ;
un premier convertisseur prévu pour être relié à un premier générateur de courant alternatif d'une turbomachine, le premier convertisseur étant relié au bus et configuré pour réguler le bus en tension à partir d'une puissance électrique fournie par le premier générateur de courant alternatif ;
un deuxième convertisseur prévu pour être relié à un deuxième générateur de courant alternatif de la turbomachine, le deuxième convertisseur étant relié au bus et configuré pour réguler le bus en tension à partir d'une puissance électrique fournie par le deuxième générateur de courant alternatif ; et
un dispositif de contrôle relié au premier convertisseur et au deuxième convertisseur, le dispositif de contrôle étant configuré pour :
   recevoir un signal de contrôle représentatif d'une correction associée à une différence entre une mesure d'une tension du bus et une référence, la différence étant représentative d'une évolution d'une tension du bus ;
   réaliser un filtrage fréquentiel du signal de contrôle de sorte à en déterminer au moins une composante basse fréquence et au moins une composante haute fréquence ;
   piloter le premier convertisseur en vue de compenser l'évolution de la tension du bus, le pilotage étant mis en œuvre à partir d'une première partie de la composante basse fréquence et d'une première partie de la composante haute fréquence ; et
   piloter le deuxième convertisseur en vue de compenser l'évolution de la tension du bus, le pilotage étant mis en œuvre à partir d'une deuxième partie de la composante basse fréquence et d'une deuxième partie de la composante haute fréquence.

Avantageusement, mais facultativement, le système électrique peut comprendre l'une au moins des caractéristiques suivantes, prise seule ou dans une quelconque combinaison :
- il comprend en outre un troisième convertisseur prévu pour être relié à une source de courant continu, le troisième convertisseur étant relié au bus et configuré pour réguler le bus en tension à partir d'une puissance électrique fournie par la source de courant continu, dans lequel le dispositif de contrôle est en outre relié au troisième convertisseur et configuré pour piloter le troisième convertisseur en vue de compenser l'évolution de la tension du bus, le pilotage étant mis en œuvre à partir d'une troisième partie de la composante basse fréquence et d'une troisième partie de la composante haute fréquence ;
- il comprend en outre une source de courant continu reliée au troisième convertisseur pour fournir une puissance au troisième convertisseur ;
- chaque convertisseur comprend un organe de contrôle configuré pour piloter le convertisseur, le dispositif de contrôle comprenant en outre un organe central configuré pour :
   recevoir le signal de contrôle ; réaliser le filtrage fréquentiel du signal de contrôle ; et
   transmettre à chacun des organes de contrôle un signal de commande pour le pilotage des convertisseurs, le signal de commande ayant été généré à partir de la première partie et de la deuxième partie de la composante basse fréquence ainsi que de la première partie et de la deuxième partie de la composante haute fréquence ;
- chaque convertisseur comprend un organe de contrôle configuré pour :
   recevoir le signal de contrôle ;
   réaliser le filtrage fréquentiel du signal de contrôle ; et
   piloter le convertisseur en vue de compenser l'évolution de la tension du bus, le pilotage étant mis en œuvre à partir d'une partie de la composante basse fréquence et d'une partie de la composante haute fréquence ;
- il comprend en outre :
   * un premier générateur de courant alternatif relié au premier convertisseur pour fournir une puissance électrique au premier convertisseur, le premier générateur de courant alternatif étant prévu pour être relié à un premier corps rotatif d'une turbomachine pour prélever une puissance mécanique sur le premier corps rotatif ; et
   * un deuxième générateur de courant alternatif relié au deuxième convertisseur pour fournir une puissance électrique au deuxième convertisseur, le deuxième générateur de courant alternatif étant prévu pour être relié à un deuxième corps rotatif d'une turbomachine pour prélever une puissance mécanique sur le deuxième corps rotatif ;
- le dispositif de contrôle est configuré pour piloter les convertisseurs en fonction d'une consigne de répartition de prélèvement entre les corps rotatifs ; et
- le dispositif de contrôle est configuré pour piloter chacun des convertisseurs en fonction d'un seuil de prélèvement maximal sur chacun des corps rotatifs et/ou sur la source de courant continu.

Selon un autre aspect de la présente divulgation, il est proposé un ensemble pour turbomachine comprenant :
un premier corps rotatif ;
un deuxième corps rotatif ; et
un système électrique tel que précédemment décrit, dans lequel le premier générateur de courant alternatif est relié au premier corps rotatif pour prélever une puissance sur le premier corps rotatif et le deuxième générateur de courant alternatif est relié au deuxième corps rotatif pour prélever une puissance sur le deuxième corps rotatif.

Selon un autre aspect de la présente divulgation, il est proposé un procédé de contrôle d'un système électrique tel que précédemment décrit, le procédé étant mis en œuvre par le dispositif de contrôle et comprenant :
la réception d'un signal de contrôle représentatif d'une correction associée à une différence entre une mesure d'une tension du bus et une référence, la différence étant représentative d'une évolution d'une tension du bus ;
le filtrage fréquentiel du signal de contrôle de sorte à en déterminer au moins une composante basse fréquence et une composante haute fréquence ;
le pilotage du premier convertisseur en vue de compenser l'évolution de la tension du bus, le pilotage étant mis en œuvre à partir d'une première partie de la composante basse fréquence et d'une première partie de la composante haute fréquence ; et
le pilotage du deuxième convertisseur en vue de compenser l'évolution de la tension du bus, le pilotage étant mis en œuvre à partir d'une deuxième partie de la composante basse fréquence et d'une deuxième partie de la composante haute fréquence.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La **figure 1** illustre de façon schématique un aéronef.
La **figure 2** illustre de façon schématique un moteur.
La **figure 3** illustre de façon schématique un système électrique selon un aspect de la présente divulgation.
La **figure 4** est un organigramme illustrant des étapes d'un procédé de contrôle d'un système électrique selon la présente divulgation.
La **figure 5** illustre le fonctionnement d'une partie d'un système électrique selon un aspect de la présente divulgation.
La **figure 6** illustre le fonctionnement d'une autre partie d'un système électrique selon un autre aspect de la présente divulgation.

Sur l'ensemble des figures, les éléments similaires portent des références identiques.

### DESCRIPTION DETAILLEE DE L'INVENTION

### Aéronef

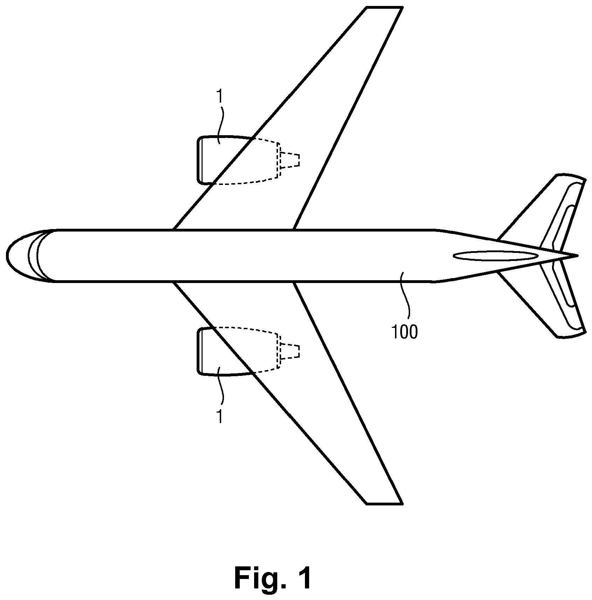

La **figure 1** illustre un aéronef **100** comprenant au moins un ensemble propulsif **1,** en l'espèce deux ensembles propulsifs **1.** L'aéronef **100** représenté est un avion, civil ou militaire, mais pourrait être tout autre type d'aéronef **100,** tel qu'un hélicoptère. Les ensembles propulsifs **1** sont rapportés et fixés sur l'avion **100,** chacun sous une aile de l'avion **100,** comme visible sur la **figure 1****.** Ceci n'est toutefois pas limitatif, puisqu'au moins un ensemble propulsif **1** peut être également monté sur l'aile de l'avion ou encore à l'arrière de son fuselage.

L'aéronef **100** comprend également une pluralité de charges (ou récepteurs) électriques (non représentés). Chaque charge électrique est un dispositif alimenté par de l'énergie électrique et pouvant être configuré pour transformer l'énergie électrique qui l'alimente en une autre forme d'énergie, comme par exemple de la chaleur ou de l'énergie mécanique. Des exemples non limitatifs de charges électriques de l'aéronef **100** sont : un moteur électrique, un système de chauffage et/ou de climatisation, un compresseur, etc. Ces charges électriques permettent notamment d'assurer un certain nombre de fonctionnalités, en vol comme au sol, telles que la pressurisation et/ou l'illumination de la cabine de l'aéronef **100,** le fonctionnement du poste de pilotage, etc.

Pour alimenter ces charges électriques en énergie électrique, l'aéronef **100** comprend une pluralité de réseaux électriques, dont au moins un réseau à courant continu. Chaque réseau électrique comprend typiquement un ensemble de conducteurs d'électricité, typiquement un ensemble de fil(s) ou barre(s) et/ou un assemblage de fil(s) et/ou une (ou plusieurs) piste(s) imprimée(s) et/ou quelque appareil qui sert à conduire l'électricité. Le réseau à courant continu n'autorise la circulation d'énergie électrique que sous forme d'un signal continu.

L'énergie électrique consommée par les charges électriques peut, au moins en partie, être produite par le moteur **2** de l'ensemble propulsif **1,** décrit plus en détails ci-après, et plus précisément par prélèvement mécanique sur des corps rotatifs **BP, HP** du moteur **2.**

### Ensemble propulsif

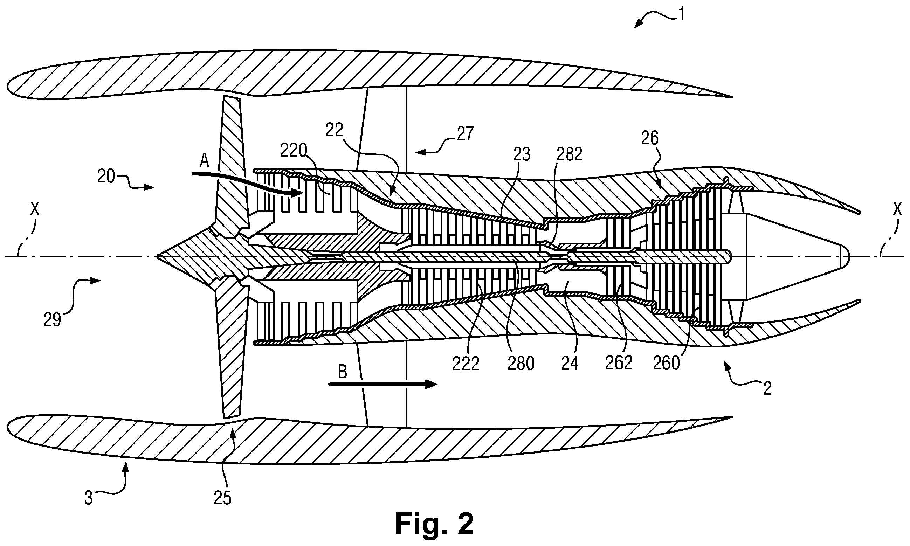

La **figure 2** illustre un ensemble propulsif **1** présentant un axe longitudinal **X-X,** et comprenant un moteur **2,** qui est une turbomachine, et une nacelle **3** entourant le moteur **2.**

L'ensemble propulsif **1** est destiné à être monté sur un aéronef **100,** par exemple de la manière illustrée sur la **figure 1****.** A cet égard, l'ensemble propulsif **1** peut comprendre un mât (non représenté) destiné à relier l'ensemble propulsif **1** à une partie de l'aéronef **100.**

Le moteur **2** illustré sur la **figure 2** est un turboréacteur à double corps, double flux et entraînement direct de la soufflante **20.** Ceci n'est toutefois pas limitatif puisque le moteur **2** peut comporter un nombre différent de corps et/ou de flux, et/ou être un autre type de turboréacteur, tel qu'un turboréacteur à entraînement de la soufflante via un réducteur, ou un turbopropulseur. De même, ce qui est décrit est applicable à tous types de turbomachine, c'est-à-dire de système permettant un transfert d'énergie entre une partie tournante et un fluide.

Sauf précision contraire, les termes « amont » et « aval » sont utilisés en référence à la direction globale d'écoulement d'air à travers l'ensemble propulsif **1** en fonctionnement.

De même, une direction axiale correspond à la direction de l'axe longitudinal **X-X** et une direction radiale est une direction orthogonale à l'axe longitudinal **X-X** et coupant l'axe longitudinal **X-X.** Par ailleurs, un plan axial est un plan contenant l'axe longitudinal **X-X** et un plan radial est un plan orthogonal à l'axe longitudinal **X-X.** Une circonférence s'entend comme un cercle appartenant à un plan radial et dont le centre appartient à l'axe longitudinal **X-X.** Une direction tangentielle ou circonférentielle est une direction tangente à une circonférence : elle est orthogonale à l'axe longitudinal **X-X** mais ne passe pas par l'axe longitudinal **X-X.** Enfin, les adjectifs « intérieur » (ou « interne ») et « extérieur » (ou « externe ») sont utilisés en référence à une direction radiale de sorte que la partie intérieure d'un élément est, suivant une direction radiale, plus proche de l'axe longitudinal **X-X** que la partie extérieure du même élément.

Comme visible sur la **figure 2****,** le moteur **2** comprend, de l'amont vers l'aval, une soufflante **20,** une section de compression **22** comprenant un compresseur basse pression **220** et un compresseur haute pression **222,** une chambre de combustion **24** et une section de détente **26** comprenant une turbine haute pression **262** et une turbine basse pression **260.** Chacun du compresseur basse pression **220,** du compresseur haute pression **222,** de la turbine haute pression **262** et de la turbine basse pression **260** comprend une partie rotor et une partie stator, la partie rotor étant susceptible d'être entraînée en rotation par rapport à la partie stator autour de l'axe longitudinal **X-X.** La soufflante **20,** la partie rotor du compresseur basse pression **220,** et la partir rotor de la turbine basse pression **260** sont reliées entre elles par un arbre basse pression **280** s'étendant le long de l'axe longitudinal **X-X,** formant ainsi un corps basse pression (corps **BP)** qui est un premier corps rotatif. La partie rotor du compresseur haute pression **222** et la partie rotor de la turbine haute pression **262** sont reliées entre elles par un arbre haute pression **282** s'étendant également le long de l'axe longitudinal **X-X,** autour de l'arbre basse pression **280,** formant ainsi un corps haute pression (corps **HP)** qui est un deuxième corps rotatif. Comme visible sur la **figure 2****,** la section de compression **22,** la chambre de combustion **24** et la section de détente **26** sont entourés par un carter moteur **23,** auxquels sont reliés les parties stator du compresseur basse pression **220,** du compresseur haute pression **222,** de la turbine haute pression **262** et de la turbine basse pression **260,** tandis que la soufflante **20** est entourée par un carter de soufflante **25.** Le carter moteur **23** et le carter de soufflante **25** sont reliés entre eux par des bras **27** profilés formant des redresseurs (ou OGV pour « *Outlet Guide Vanes* » dans la terminologie anglo-saxonne) répartis de manière circonférentielle tout autour de l'axe longitudinal **X-X.** Au moins certains de ces bras **27** peuvent être prévus structuraux. L'axe longitudinal **X-X** définit l'axe de rotation pour la soufflante **20,** les parties rotor de la section de compression **22** et les parties rotor de la section de détente **26,** autrement dit pour le corps **BP** et le corps **HP,** lesquels sont chacun susceptibles d'être entraînés en rotation autour de l'axe longitudinal **X-X** par rapport au carter moteur **23** et au carter de soufflante **25.**

La nacelle **3** s'étend radialement à l'extérieur du moteur **2,** tout autour de l'axe longitudinal **X-X,** de sorte à entourer à la fois le carter de soufflante **25** et le carter moteur **23,** et à définir, avec une partie aval du carter moteur **23,** une partie aval d'une veine secondaire **B,** la partie amont de la veine secondaire **B** étant définie par le carter de soufflante **25** et une partie amont du carter moteur **23.** La partie amont de la nacelle **3** définit en outre une entrée d'air **29** par laquelle la soufflante **20** aspire le flux d'air circulant à travers l'ensemble propulsif **1.** La nacelle **3** est solidaire du carter de soufflante **25** et rapportée et fixée à l'aéronef **100** au moyen du mât.

Le moteur **2** peut également comprendre au moins un boîtier d'accessoires (non représenté), appelé AGB (pour « *Accessory gear box »* dans la terminologie anglo-saxonne), typiquement logé dans une cavité ménagée au sein de la nacelle **3.** Le boîtier d'accessoires comprend un ensemble d'engrenages permettant d'entraîner en rotation une pluralité d'arbres autour de leur propre axe, des accessoires étant montés sur ces arbres pour tirer de leur rotation une puissance mécanique utile. L'ensemble d'engrenages est lui-même entraîné à l'aide d'un arbre de prise de mouvement (ou RDS pour « *Radial Drive Shaft* » dans la terminologie anglo-saxonne) reliant, éventuellement par l'intermédiaire d'un boîtier de transfert (non représenté), le boîtier d'accessoires à l'un au moins parmi le corps haute pression **222, 262, 282** et le corps basse pression **20, 220, 260, 280,** typiquement en étant engrené avec l'un au moins parmi l'arbre haute pression **282** et l'arbre basse pression **280.** A cet égard, l'arbre de prise de mouvement peut s'étendre à l'intérieur d'une cavité longitudinale ménagée au sein de l'un des bras **27.** De cette manière, une puissance mécanique est susceptible d'être prélevée sur l'un au moins parmi le corps haute pression **222, 262, 282** et le corps basse pression **20, 220, 260, 280** pour être délivrée à l'un au moins des accessoires par l'intermédiaire du boîtier d'accessoires.

Le moteur **2** peut, lui aussi, comprendre une pluralité de charges électriques (non représentées), telles qu'un démarreur, des géométries variables ou des systèmes de dégivrage, lesquelles doivent également être alimentées en énergie électrique. L'alimentation d'au moins certaines de ces charges électriques peut être sous la forme d'un signal continu, typiquement une tension continue.

En fonctionnement, la soufflante **20** aspire un flux d'air dont une portion, circulant au sein d'une veine primaire **A,** est, successivement, comprimée au sein de la section de compression **22,** enflammée au sein de la chambre de combustion **24** et détendue au sein de la section de détente **26** avant d'être éjectée hors du moteur **2.** La veine primaire **A** traverse le carter moteur 23 de part en part. Une autre portion du flux d'air circule au sein de la veine secondaire B qui prend une fourme annulaire allongée entourant le carter moteur 23, l'air aspiré par la soufflante 20 étant redressé par les redresseurs puis éjecté hors de l'ensemble propulsif 1. De cette manière, l'ensemble propulsif 1 génère une poussée. Cette poussée peut, par exemple, être mise au profit de l'aéronef 100 sur lequel l'ensemble propulsif 1 est rapporté et fixé.

### Système électrique

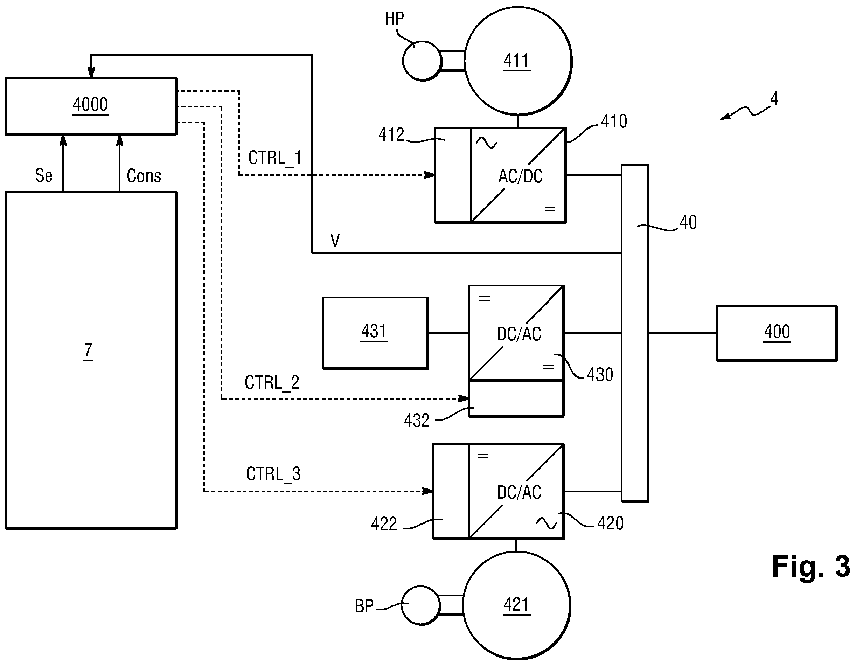

La **figure 3** illustre un système électrique 4 distribué entre l'ensemble propulsif 1 et l'aéronef 100 pour l'alimentation en énergie électrique des charges électriques 400 du moteur 2 et/ou de l'aéronef 100, typiquement au moyen du réseau à courant continu. Le système électrique **4** permet notamment de réaliser l'interface entre les corps rotatifs **BP, HP** du moteur **2** et le réseau électrique de l'aéronef **100.** Le système électrique est notamment configuré pour répondre aux besoins en puissance électrique des charges **400** de l'aéronef **100** et/ou du moteur **2** par prélèvement mécanique sur le moteur **2,** et pour assister le démarrage et/ou le fonctionnement en vol du moteur **2** à l'aide de sources électriques de l'aéronef **100** et/ou du moteur **2.** En d'autres termes, le moteur **2** est hybridé électriquement.

Le système électrique **4** comprend un bus **40** électrique, ou bus **40** d'alimentation électrique, relié à au moins une charge **400** électrique de l'aéronef **100** et/ou du moteur **2,** de préférence un ensemble de plusieurs charges **400** de l'aéronef **100** et/ou du moteur **2,** le bus **40** étant configuré pour fournir une puissance électrique à la charge **400** sous forme d'un signal continu afin notamment de répondre à ses besoins en puissance. En d'autres termes, le bus **40** est configuré pour autoriser une circulation d'énergie électrique sous forme d'un signal continu. Le bus **40** peut, par exemple, comprendre un ensemble de conducteurs d'électricité, typiquement un ensemble de fil(s) ou barre(s) et/ou un assemblage de fil(s) et/ou une (ou plusieurs) piste(s) imprimée(s) et/ou quelque appareil qui sert à conduire l'électricité.

Le système électrique **4** comprend en outre plusieurs convertisseurs **410, 420, 430** électriques, chacun relié à une source électrique **411, 421, 431** respective, c'est-à-dire à un élément configuré pour fournir une puissance électrique. Les sources électriques **411, 421, 431** peuvent être un générateur de courant alternatif **411, 421,** et/ou une source de courant continu **431.** Le générateur de courant alternatif **411, 421** et la source de courant continu **431** peuvent appartenir au moteur **2,** c'est-à-dire être pilotés en même temps que le moteur 2, voire être pilotés par le moteur **2.** Dans ce cas ce sont des sources électriques **411, 421, 431** du moteur **2.** Du reste, la source de courant continu **431** n'est pas nécessairement localisée dans le moteur **2** et peut, par exemple, être logée dans un pylône permettant de fixer le moteur **2** à l'aéronef **100.** Alternativement, la source de courant continu **431** appartient à l'aéronef **100,** c'est-à-dire qu'elle est pilotée en même temps que l'aéronef 100. Comme visible sur la **figure 3****,** le système électrique **4** peut ainsi comprendre un premier convertisseur **410** relié à un premier générateur de courant alternatif **411,** un deuxième convertisseur **420** relié à un deuxième générateur de courant alternatif **421** et, optionnellement, un troisième convertisseur **430** relié à une source de courant continu **431.** Le troisième convertisseur 430 et la source de courant continu **431** sont optionnels dans le sens où, dans certains modes de réalisation, ils sont absents ou, dans d'autres modes de réalisation, la source de courant continu **431** est indisponible. D'autre part, chacun des convertisseurs **410, 420, 430** est, comme visible sur la **figure 3****,** relié au bus **40.** De fait, au moins un, si ce n'est chacun, des convertisseurs **410, 420, 430** est configuré pour réguler le bus **40** en tension à partir, c'est-à-dire à l'aide, d'une puissance électrique fournie par la ou les source(s) électrique(s) **411, 421, 431** auxquels les convertisseurs **410, 420, 430** sont reliés. Le nombre et le type de convertisseurs **410, 420, 430** et de sources électriques **411, 421, 431** n'est, bien entendu, pas limitatif.

La régulation en tension du bus **40** est critique. En effet, l'évolution temporelle de la tension électrique au sein du bus **40,** lors du fonctionnement du système électrique **4,** si elle peut ponctuellement varier autour d'une valeur nominale donnée, doit pour autant demeurer au sein de limites d'un gabarit, ce qui est la garantie que l'ensemble des éléments qui sont connectés au bus **40** fonctionne correctement. Le gabarit définit, en fait, les limites supérieures et inférieures d'excursion de la tension, en fonction du temps, lors du fonctionnement du système électrique **4.** Le gabarit peut comprendre des limites définies pour des conditions de fonctionnement normales et/ou anormales, lesquelles limites entourent, de manière symétrique ou non, un niveau de tension électrique nominal du bus **40.** Dans un diagramme (non représenté) fournissant l'évolution de la tension électrique en fonction du temps, une limite d'un gabarit est typiquement représentée comme une ligne, brisée ou non. De préférence, même si la limite ne définit par une valeur de tension électrique constante dans un premier temps, notamment pendant le temps caractéristique de mise en fonctionnement (ou démarrage) du système électrique **4** ou encore pendant le temps d'établissement d'un régime permanent en cas de transitoire de puissance, il est commun que la limite définisse ensuite une valeur de tension électrique constante, et ce afin de garantir la stabilité de fonctionnement du bus **40** et, partant, du système électrique **4.** Un tel gabarit peut, par exemple, être défini dans une norme relative à la qualité du système électrique **4** et/ou du réseau à courant continu, mais aussi être défini par un cahier des charges d'un véhicule type aéronef auquel le système électrique **4** est raccordé, typiquement les exigences du fabricant de l'aéronef **100** et/ou du moteur **2** au sein duquel le système électrique **4** est intégré.

D'autre part, la régulation en tension du bus **40** permet de répondre aux demandes en puissance de la part des charges **400** reliées au bus **40.** Typiquement, lorsque la quantité de puissance prélevée par au moins une charge **400** sur le bus **40** est supérieure à la quantité de puissance injectée sur le bus **40** par au moins un convertisseur **410, 420, 430,** la tension du bus **40** diminue significativement. Inversement, lorsque la quantité de puissance injectée par au moins un convertisseur **410, 420, 430** sur le bus **40** est supérieure à la quantité de puissance prélevée sur le bus **40** par au moins une charge **400,** la tension du bus **40** augmente. Ainsi, réguler la tension du bus **40** permet, outre d'assurer la sécurité du système électrique **4,** de répondre aux besoins en puissance des charges **400.** En d'autres termes, chacun des convertisseurs **410, 420, 430** est configuré pour adapter en permanence la puissance qu'il injecte ou prélève sur le bus **40,** selon la tension du bus **40,** de sorte à répondre exactement aux besoins en puissance des charges **400** reliées au bus **40.**

Cette injection ou ce prélèvement de puissance sur le bus **40** par les convertisseurs **410, 420, 430** est notamment permise par leur liaison avec les sources électriques **411, 421, 431.** De fait, au moins un, si ce n'est chacun, des générateurs **411, 421** à courant alternatif est relié à un corps rotatif **BP, HP,** du moteur **2** pour permettre un échange de puissance mécanique et/ou électrique entre le corps rotatif **BP, HP** et le générateur **411, 421** de courant alternatif, de préférence pour prélever une puissance mécanique sur le corps rotatif **BP, HP** et la transformer en une puissance électrique, laquelle puissance électrique est ensuite délivrée au premier convertisseur **410** et/ou au deuxième convertisseur **420** pour être injectée sur le bus **40.** Comme la puissance électrique fournie par les générateurs **411, 421** à courant alternatif est sous la forme d'un signal alternatif, chacun du premier convertisseur **410** et du deuxième convertisseur **420** est configuré pour transformer, de manière réversible, ce signal alternatif en un signal continu adapté pour être injecté, puis circuler, sur le bus **40.** De même, la source de courant continu **431** peut délivrer une puissance sous forme d'un signal continu au troisième convertisseur **430,** lequel va tout de même le convertir, également de manière réversible, pour le mettre en forme selon les contraintes propres au bus **40,** puis l'injecter sur le bus **40.** Chacun, ou au moins l'un, des générateurs **411, 421** de courant alternatif peut, par exemple, être une machine synchrone à rotor bobiné, comprenant typiquement trois étages, appelée VFG (pour « *Variable Frequency Generator »* dans la terminologie anglo-saxonne), entrainée par l'un au moins parmi l'arbre haute pression **282** et l'arbre basse pression **280** du moteur **2,** typiquement par l'intermédiaire du boîtier d'accessoires. D'autres types de machines électriques sont envisageables, telles que, de préférence, des machines synchrones à aimant permanent, appelées PMSM (pour *« Permanent-Magnet Synchronous Machine Drives* » dans la terminologie anglo-saxonne) qui présentent notamment l'avantage d'avoir une masse plus réduite, ou telles que des machines asynchrones (ou *« Induction machine »* dans la terminologie anglo-saxonne) ou à réluctance variable. De préférence, le premier générateur **411** de courant alternatif est relié au corps **HP,** tandis que le deuxième générateur **421** de courant alternatif est relié au corps **BP, 280.** La source de courant continu **431** peut, quant à elle, comprendre une batterie, un supercondensateur, une génératrice à courant continu et/ou une pile à combustible. La source de courant continu **431** permet notamment de soulager les corps rotatifs **BP, HP,** ou prendre leur relais, lorsque, par exemple, le niveau de prélèvement exigé pour répondre aux besoins en puissance des charges **400** est trop élevé, mais permet aussi d'absorber certaines dynamiques, telles des variations brusques, du comportement des charges **400.**

La **figure 3** illustre également que le système électrique **4** comprend un dispositif de contrôle **412, 422, 432, 4000,** relié à au moins un, si ce n'est chacun, des convertisseurs **410, 420, 430.**

Le dispositif de contrôle **412, 422, 432, 4000** illustré sur la **figure 3** comprend un organe central **4000** et une pluralité d'organes de contrôle **412, 422, 432,** chacun des organes de contrôle **412, 422, 432** étant relié (ou intégré) à un des convertisseurs **410, 420, 430.** Alternativement, le dispositif de contrôle **412, 422, 432** peut ne comprendre que la pluralité des organes de contrôle **412, 422, 432,** chacun des organes de contrôle **412, 422, 432** étant relié (ou intégré) à un des convertisseurs **410, 420, 430.**

Le dispositif de contrôle **412, 422, 432, 4000** est en outre configuré pour recevoir un signal V représentatif d'une mesure d'une tension du bus **40.** Pour ce faire, le dispositif de contrôle **412, 422, 432, 4000** peut être relié au bus **40** ou à un capteur de tension relié au bus **40,** et recevoir du bus **40** (ou de ce capteur) le signal V. Ce signal V peut être reçu par l'intermédiaire d'une liaison physique ou sans fil. Ce signal V représente notamment l'évolution des besoins en puissance de la part des charges **400** reliées au bus **40.** Typiquement, lorsqu'une charge **400** requiert soudainement de pouvoir prélever sur le bus **40** une puissance importante, du fait du temps de réponse du système électrique 4 pour fournir au bus **40** la puissance nécessaire pour compenser la puissance prélevée, la tension du bus **40** va brutalement chuter, et cette chute sera remontée au dispositif de contrôle **412, 422, 432, 4000** par l'intermédiaire du signal **V.** De la même manière, lorsqu'une charge **400** se déleste brusquement d'une puissance importante sur le bus **40,** du fait du temps de réponse du système électrique **4** pour soutirer au bus **40** la puissance nécessaire en vue de compenser ce délestage, la tension du bus **40** va brutalement augmenter, et cette augmentation sera remontée au dispositif de contrôle **412, 422, 432, 4000** par l'intermédiaire du signal **V.** De ce fait, le signal **V** est typiquement un signal temporel, c'est-à-dire fournissant (ou représentant) l'évolution de la tension du bus **40** en fonction du temps. De nombreuses charges **400,** notamment les charges **400** dites « actives », peuvent présenter ce type de comportement dynamique, lequel peut d'ailleurs varier au cours des différentes phases de vol.

Les évolutions de la tension du bus **40** sont compensées par l'action des convertisseurs **410, 420, 430,** laquelle action suit donc l'évolution de la tension, aussi brusque et fluctuante soit-elle. C'est pourquoi, cette action est coordonnée par le dispositif de contrôle **412, 422, 432, 4000** pour maintenir la tension du bus **40** dans les gabarits permettant un fonctionnement stable du système électrique **4.**

Pour ce faire, le dispositif de contrôle **412, 422, 432, 4000** est configuré pour réaliser un filtrage fréquentiel d'un courant de contrôle i, lequel est représentatif de l'action requise des convertisseurs **410, 420, 430** pour corriger une différence relevée entre le signal **V** et une référence **V_ref,** par exemple associée au gabarit, comme décrit plus en détails ci-après. En réalité, le courant de contrôle **i** est représentatif (ou associé) à l'évolution de tension du bus **40** relevée via le signal **V.**

Or, la composante haute fréquence de l'évolution de la tension du bus **40** nécessite une réponse immédiate et rapide du système électrique **4,** tandis que sa composante basse fréquence exige une réponse de fond, sur le long terme, du système électrique **4.** Typiquement, lors du fonctionnement du moteur **2,** la puissance demandée par les charges **400** évolue avec une dynamique lente (composante basse fréquence), mais peut connaître des appels brusques et ponctuels de puissance (composante haute fréquence) de la part de certaines charges **400,** par exemple des actionneurs électriques des volets des ailes de l'aéronef **100.** Dès lors, il peut s'avérer pertinent de piloter les convertisseurs **410, 420, 430** en discriminant ces différentes composantes, par l'intermédiaire du filtrage fréquentiel du courant de contrôle **i.**

De manière générale, la composante basse fréquence de l'évolution de la tension du bus **40** déterminera le point de fonctionnement du moteur **2,** tandis que la composante haute fréquence sera plutôt absorbée par l'inertie des corps rotatifs **BP, HP.** Pour cela, le dispositif de contrôle **412, 422, 432, 4000** est en outre configuré pour piloter chacun des convertisseurs **410, 420, 430** en vue de compenser une partie de la composante haute fréquence et une partie de la composante basse fréquence. En d'autres termes, chaque convertisseur **410, 420, 430** prend sa part de la réponse aux besoins en puissance exprimée par les charges **400** et matérialisées par l'évolution de la tension du bus **40.** Plus exactement, chacun des convertisseurs **410, 420, 430** reçoit du dispositif de contrôle **412, 422, 432, 4000** une consigne qui lui est propre, et à partir de laquelle le convertisseur **410, 420, 430** régule en tension le bus **40.** La combinaison des régulations en tension de chaque convertisseur **410, 420, 430** permet ainsi une optimisation du point de fonctionnement du moteur en suivant en permanence les besoins en puissance des charges **400.** Ainsi, le corps rotatif **BP, HP** qui serait le plus sensible à des fluctuations rapides de prélèvement de puissance mécanique sur certains points de fonctionnement peut avantageusement être délesté en faveur de l'autre corps rotatif **BP, HP** ou de la source de courant continu **431,** et ce afin de permettre une optimisation du point de fonctionnement du moteur **2.**

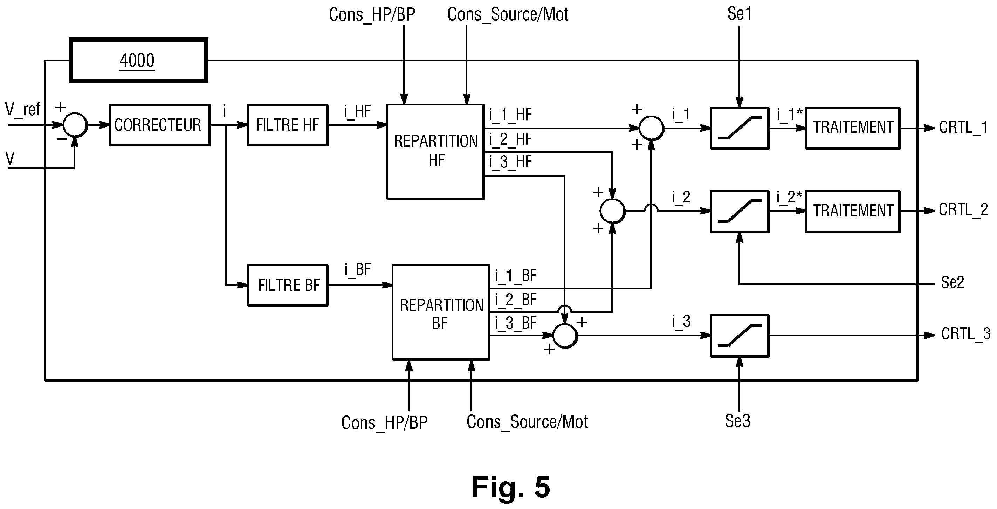

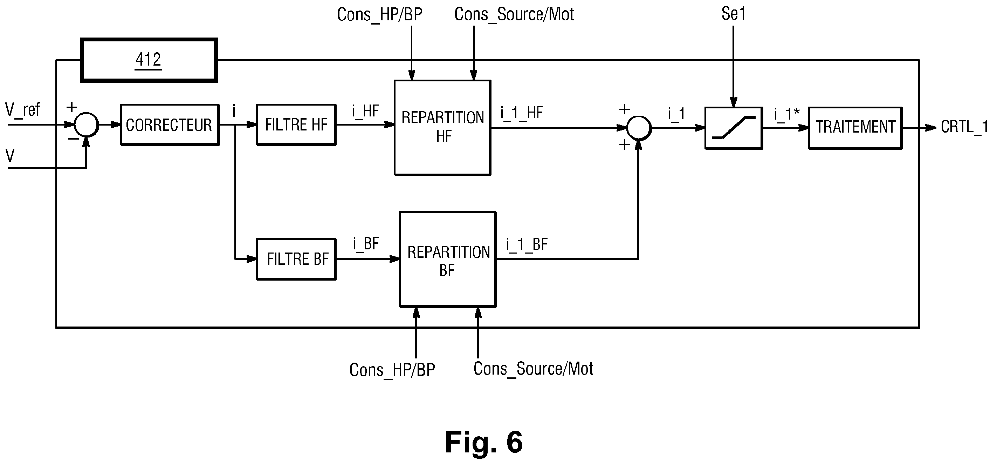

Dans le système électrique **4** illustré sur la **figure 3****,** c'est l'organe central **4000** qui est configuré pour recevoir puis traiter le signal **V,** comme illustré plus en détails sur la **figure 5****.** En outre, l'organe central **4000** est configuré pour transmettre à chacun des organes de contrôle **412, 422, 432** un signal de commande **CTRL_1, CTRL_2, CTRL_3,** pouvant typiquement prendre la forme d'un courant de commande pour le pilotage des convertisseurs **410, 420, 430.** Dans le système électrique 4 illustré sur la **figure 3****,** le contrôle est donc réalisé de manière centralisée. Alternativement, lorsque le dispositif de contrôle **412, 422, 432** ne comprend que les organes de contrôle **412, 422, 432,** chacun des organes de contrôle **412, 422, 432** est configuré pour recevoir et traiter le signal **V,** puis piloter le convertisseur **410, 420, 430** en conséquence, comme visible sur la **figure 6****.** En d'autres termes, le contrôle est alors réalisé de manière décentralisé.

La **figure 3** montre en outre la présence d'un contrôleur général **7,** qui peut par exemple être tout ou partie du système réalisant l'interface entre le cockpit de l'aéronef **100** et le moteur **2** (ou FADEC ou « *Full Authority Digital Engine Control* », dans la terminologie anglo-saxonne), typiquement être l'unité de commande du moteur **2,** (ou ECU pour *« Electronic Control Unit »* dans la terminologie anglo-saxonne), laquelle est intégrée au FADEC. Le contrôleur général **7** est relié au dispositif de contrôle **412, 422, 432, 4000,** en l'occurrence à l'organe central **4000,** mais pourrait alternativement être directement relié à chacun des organes de contrôle **412, 422, 432** lorsque l'organe central **4000** n'est pas présent. Dans ce cas, les fonctions réalisées par l'organe central **4000** sont soit effectuées localement dans les organes de contrôle **412, 422, 432,** soit effectuées par le contrôleur général **7.** Le contrôleur général **7** détermine des contraintes supplémentaires à respecter par le système électrique **4** pour répondre aux besoins en puissances des charges **400.** Notamment, le contrôleur général **7** peut transmettre au dispositif de contrôle **412, 422, 432, 4000** une consigne **Cons** de répartition de prélèvement entre les corps rotatifs **BP, HP** et la source de courant continu **431,** et/ou un seuil **Se1, Se2, Se3** de prélèvement maximal sur au moins un, si ce n'est chacun, des corps rotatifs **BP, HP** et de la source de courant continu **431,** le seuil **Se1, Se2, Se3** étant, le cas échéant, propre à chaque corps rotatif **BP, HP** et à la source de courant continu **431.** Plus précisément, la consigne **Cons** de répartition indique au dispositif de contrôle **412, 422, 432, 4000** la manière dont la totalité de la puissance à prélever sur le moteur **2** pour répondre aux besoins des charges **400** doit être répartie entre les corps rotatifs **BP, HP,** et la source de courant continu **431,** et peut typiquement prendre la forme d'un pourcentage. Les seuils **Se1, Se2, Se3** de prélèvement fournissent, quant à eux, et pour chacune des sources électriques **411, 421, 431,** la valeur maximale de la puissance que le dispositif de contrôle **412, 422, 432, 4000** est autorisé à faire prélever par leur convertisseur respectif **410, 420, 430** ; c'est-à-dire une première valeur maximale de puissance pouvant être prélevée sur le moteur **2** par le premier convertisseur **410,** via le premier générateur **411** à courant alternatif, une deuxième valeur maximale de puissance pouvant être prélevée sur le moteur **2** par le deuxième convertisseur **420,** via le deuxième générateur **421** à courant alternatif, et une troisième valeur maximale de puissance pouvant être prélevée sur la source de courant continu **431** par le troisième convertisseur **430.** Le seuil **Se3** associé à la source de courant continu **431** peut typiquement prendre la forme d'une limite de prélèvement de courant de charge ou de décharge si la source de courant continu **431** est une batterie. Le dispositif de contrôle **412, 422, 432, 4000** est alors configuré pour piloter les convertisseurs **410, 420, 430** en fonction de cette consigne **Cons** de répartition et/ou de ces seuils **Se1, Se2, Se3.** Plus exactement, les parties de la composante haute fréquence et de la composante basse fréquence qui sont compensées par le convertisseur **410, 420, 430** sont déterminées à l'aide de la consigne **Cons** de répartition et/ou des seuils **Se1, Se2, Se3.**

La consigne **Cons** de répartition et/ou les seuils **Se1, Se2, Se3** de prélèvement transmis par le contrôleur général **7** peuvent évoluer au cours du temps et permettent notamment de s'assurer que chacun des corps rotatifs **BP, HP** et la source de courant continu **431** fournissent la puissance nécessaire aux charges en optimisant le point de fonctionnement du moteur **2.** Par exemple, lors du décollage, qui est une phase de vol sollicitant une forte poussée de la soufflante **20,** c'est-à-dire une phase lors de laquelle une puissance importante est transmisse par le corps **BP** à la soufflante **20,** la partie haute fréquence de la puissance sera prélevée préférentiellement, voire totalement, sur le corps **HP,** la partie basse fréquence de la puissance étant prélevée préférentiellement, voire totalement, sur le corps **BP,** et ce afin d'éviter des oscillations de poussée sur le corps **BP.** Au contraire, lors de certaines phases de vol où les limites d'opérabilité du corps **HP** sont atteintes, il est préférable de prélever une puissance plus importante sur le corps **BP.** En tout état de cause, cette consigne **Cons** de répartition et/ou ces seuils **Se1, Se2, Se3** de prélèvement peut également s'avérer nécessaire dans la mesure où le prélèvement mécanique a des conséquences différentes suivant le corps rotatif **BP, HP** sur lequel la puissance est prélevée.

### Procédé de contrôle

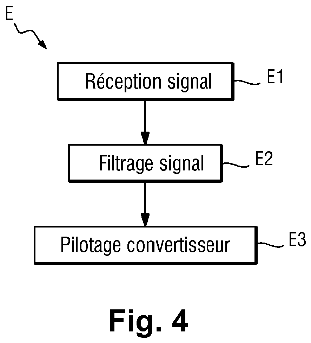

La **figure 4** illustre plus précisément le procédé de contrôle E qui peut être mis en œuvre par le dispositif de contrôle **412, 422, 432, 4000** pour permettre de répondre en temps réel aux besoins en puissance des charges **400,** quelle que soit la phase de fonctionnement du moteur **2.** La **figure 5** illustre ce procédé de contrôle mis en œuvre au sein de l'organe central **4000,** tandis que la **figure 6** illustre ce procédé de contrôle mis en œuvre au sein d'un organe de contrôle, typiquement le premier organe de contrôle **412.** Ce procédé de contrôle **E** permet au système électrique **4** de corriger une différence (ou erreur) relevée entre une référence **V_ref,** qui dépend du gabarit en tension du bus **40** et représente l'état dans lequel devrait se trouver le bus **40** pour un fonctionnement normal, et une mesure de la tension **V** du bus **40,** qui représente quant à elle la réalité des besoins des charges **400** telles qu'elles l'expriment par injection ou prélèvement de puissance sur le bus **40.** En d'autres termes, ce procédé de contrôle **E,** en corrigeant cette différence entre la référence **V_ref** et la mesure de la tension **V** du bus **40,** assure que les besoins en puissance des charges **400** soient assouvis par la régulation en puissance du bus **40.**

Plus précisément, comme visible sur la **figure 5** et la **figure 6****,** un signal **V** représentatif d'une mesure de la tension du bus **40** est reçu. Ce signal **V** peut alors être comparé à une référence **V_ref.** S'il n'y a aucune différence entre référence **V_ref** et signal **V** mesuré, c'est que la tension du bus **40** n'a pas à être régulée. En revanche, si une différence est constatée, c'est-à-dire que la tension du bus **40** a subi une évolution, il est nécessaire que la tension du bus **40** soit régulée. Pour ce faire, il est nécessaire de piloter les sources électriques **411, 421, 431** en vue de réaliser cette régulation en tension. Ce pilotage (ou cette commande) peut, par exemple, consister en la transmission d'un courant de consigne, d'une puissance de consigne ou même d'un couple de consigne. Ces consignes fixeront la manière dont le système électrique **4,** et plus précisément les sources électriques **411, 421, 431,** devra adapter son fonctionnement pour mener à bien cette régulation en tension. En l'occurrence, un courant de contrôle i de consigne, plus aisé à manipuler par le dispositif de contrôle **412, 422, 432, 4000,** qu'il s'agisse de l'organe central **4000** ou des organes de contrôle **412, 422, 432,** peut avantageusement être généré puis traité en fonction de l'erreur relevée dans le signal **V** par rapport à la référence **V_ref.** Le traitement peut avantageusement être mise en œuvre par un correcteur de type proportionnel intégral. Ainsi, le courant de contrôle **i** est représentatif de la correction à apporter par le système électrique **4** pour réduire, voire annuler, la différence entre référence **V_ref** et signal **V** mesuré, et ainsi compenser l'évolution de la tension du bus **40.** Toutefois, ce courant de contrôle **i** ne fait que fixer la consigne générale à adopter par le système électrique **4,** sans pour autant discriminer le rôle que chacun des membres du système électrique **4,** et plus précisément les sources électriques **411, 421, 431,** aura à jouer dans la régulation en tension.

A cet égard, le courant de contrôle **i,** est reçu **E1** par un organe de filtrage qui lui fait subir un filtrage fréquentiel **E2** de sorte à en déterminer au moins une composante basse fréquence **i_BF** et une composante haute fréquence **i_HF,** lesquelles composantes **i_BF, i_HF** sont, en fait, représentatives, respectivement, de la composante basse fréquence et de la composante haute fréquence de l'évolution de la tension sur le bus **40.** De fait, l'évolution du courant de contrôle i est représentatif de l'évolution de la tension du bus **40,** par l'intermédiaire du signal **V** mesuré. Pour ce faire, le courant de contrôle **i** est, par exemple, dupliqué, puis chacun des jumeaux du courant de contrôle **i** subit un filtrage fréquentiel, l'un basse fréquence et l'autre haute fréquence. Par haute fréquence, il faut comprendre des fréquences supérieures ou égales à 1 Hz et inférieures ou égales à 1000 Hz, tandis que basse fréquence renvoie à des fréquences inférieures à 1 Hz.

A partir d'une consigne **Cons** de répartition reçue du contrôleur général **7,** une partie dédiée à chaque convertisseur **410, 420, 430** est déterminée, pour chacune de la composante basse fréquence **i_BF** et de la composante haute fréquence **i_HF.** Cette consigne **Cons** de répartition peut être répartie en deux consignes : une consigne de répartition **Cons_HP/BP** imposant la répartition de prélèvement entre corps **HP** et corps **BP,** et une consigne de répartition **Cons_Source/Mot** entre moteur **2** et source de courant continu **431.** La consigne de répartition **Cons_Source/Mot** entre moteur **2** et source de courant continu **431** peut notamment être utilisée pour soulager les corps rotatifs **BP, HP,** ou prendre leur relais, lorsque, par exemple, le niveau de prélèvement exigé pour répondre aux besoins en puissance des charges **400** est trop élevé, ou pour permettre d'absorber certaines dynamiques, telles des variations brusques, du comportement des charges **400.** En outre, la consigne de répartition **Cons_HP/BP** imposant la répartition de prélèvement entre corps **HP** et corps **BP,** et la consigne de répartition **Cons_Source/Mot** entre moteur **2** et source de courant continu **431** peuvent, chacune, être propre à la composante basse fréquence et à une composante haute fréquence de l'évolution de la tension sur le bus **40.** Typiquement, chacun des jumeaux du courant de contrôle filtré est ainsi modifié **i_1_BF, i_2_BF, i_3_BF, i_1_HF, i_2_HF, i_3_HF** en fonction de la consigne **Cons** de répartition. Comme visible sur la **figure 5****,** lorsque c'est l'organe central **4000** qui est en charge du contrôle, il en ressort autant de paires de jumeaux de courants de contrôle **i_1_BF/i_1_HF, i_2_BF/i_2_HF, i_3_HF/i_3_BF** qu'il y a de convertisseurs **410, 420, 430** dans le système électrique **4.** Comme visible sur la **figure 6****,** lorsque c'est chaque organe de contrôle **412, 422, 432** qui est en charge du contrôle, il ne ressort qu'une paire de jumeaux de courant **i_1_BF/i_1_HF** de contrôle dédiée au convertisseur **410** auquel l'organe de contrôle **412** est relié.

Les parties ainsi déterminées sont réunies pour être transmises au convertisseur **410, 420, 430** correspondant et peuvent, préalablement à cette transmission, subir un traitement à partir de seuils **Se1, Se2, Se3** de prélèvement pour chaque source électrique **411, 421, 431** reçu du contrôleur général 7. Typiquement, chaque paire de jumeaux **i_1_BF/i_1_HF, i_2_BF/i_2_HF, i_3_HF/i_3_BF** du courant de contrôle est sommée **i_1, i_2, i_3,** puis traitée à l'aide des seuils **Se1, Se2, Se3** de prélèvement si nécessaire, de sorte à fournir un courant de contrôle final **i_1*, i_2*,** qui peut subir un dernier traitement pour correspondre aux contraintes propres aux convertisseurs **410, 420, 430,** prêt à être acheminé **CTRL_1, CTRL_2, CTRL_3** vers le convertisseur **410, 420, 430** pour assurer son pilotage.

Chaque convertisseur **410, 420, 430** est piloté **E3,** par exemple à l'aide du courant de contrôle final **CTRL_1, CTRL_2, CTRL_3,** en vue de compenser sa partie de la composante basse fréquence et sa partie de la composante haute fréquence de l'évolution de la tension du bus **40.**

## Revendications

1. Système électrique (4) pour turbomachine (2) comprenant :
un bus d'alimentation électrique (40) prévu pour être relié à au moins une charge (400) et configuré pour fournir une puissance électrique à la charge (400) sous forme d'un signal continu ;
un premier convertisseur (410) prévu pour être relié à un premier générateur (411) de courant alternatif d'une turbomachine, le premier convertisseur (410) étant relié au bus (40) et configuré pour réguler le bus (40) en tension à partir d'une puissance électrique fournie par le premier générateur (411) de courant alternatif ;
un deuxième convertisseur (420) prévu pour être relié à un deuxième générateur (421) de courant alternatif de la turbomachine, le deuxième convertisseur (420) étant relié au bus (40) et configuré pour réguler le bus (40) en tension à partir d'une puissance électrique fournie par le deuxième générateur (421) de courant alternatif ; et
un dispositif de contrôle (412, 422, 4000) relié au premier convertisseur (410) et au deuxième convertisseur (420), le dispositif de contrôle (412, 422, 4000) étant configuré pour :
recevoir un signal de contrôle (i) représentatif d'une correction associée à une différence entre une mesure (V) d'une tension du bus (40) et une référence (V_ref), la différence étant représentative d'une évolution d'une tension du bus (40) ;
**caractérisé en ce que** le dispositif de contrôle est configuré pour:
réaliser un filtrage fréquentiel du signal de contrôle (i) de sorte à en déterminer au moins une composante basse fréquence (i_BF) et au moins une composante haute fréquence (i_HF) ;
piloter le premier convertisseur (410) en vue de compenser l'évolution de la tension du bus (40), le pilotage étant mis en œuvre à partir d'une première partie de la composante basse fréquence (i_BF) et d'une première partie de la composante haute fréquence (i_HF) ; et
piloter le deuxième convertisseur (420) en vue de compenser l'évolution de la tension du bus (40), le pilotage étant mis en œuvre à partir d'une deuxième partie de la composante basse fréquence (i_BF) et d'une deuxième partie de la composante haute fréquence (i_HF).

2. Système électrique (4) selon la revendication 1, comprenant en outre un troisième convertisseur (430) prévu pour être relié à une source de courant continu (431), le troisième convertisseur (430) étant relié au bus (40) et configuré pour réguler le bus (40) en tension à partir d'une puissance électrique fournie par la source de courant continu (431), dans lequel le dispositif de contrôle (412, 422, 432, 4000) est en outre relié au troisième convertisseur (430) et configuré pour piloter le troisième convertisseur (430) en vue de compenser l'évolution de la tension du bus (40), le pilotage étant mis en œuvre à partir d'une troisième partie de la composante basse fréquence (i_BF) et d'une troisième partie de la composante haute fréquence (i_HF).

3. Système électrique (4) selon la revendication 2, comprenant en outre une source de courant continu (431) reliée au troisième convertisseur (430) pour fournir une puissance au troisième convertisseur (430).

4. Système électrique (4) selon l'une des revendications 1 à 3, dans lequel chaque convertisseur (410, 420, 430) comprend un organe de contrôle (412, 422, 432) configuré pour piloter le convertisseur (410, 420, 430), le dispositif de contrôle (412, 422, 432, 4000) comprenant en outre un organe central (4000) configuré pour :
recevoir le signal de contrôle (i) ;
réaliser le filtrage fréquentiel du signal de contrôle (i) ; et
transmettre à chacun des organes de contrôle un signal de commande (CTRL_1, CTRL_2, CTRL_3) pour le pilotage des convertisseurs (410, 420, 430), le signal de commande CTRL_1, CTRL_2, CTRL_3) ayant été généré à partir de la première partie et de la deuxième partie de la composante basse fréquence (i_BF) ainsi que de la première partie et de la deuxième partie de la composante haute fréquence (i_HF).

5. Système électrique (4) selon l'une des revendications 1 à 3, dans lequel chaque convertisseur (410, 420, 430) comprend un organe de contrôle (412, 422, 432) configuré pour :
recevoir le signal de contrôle (i) ;
réaliser le filtrage fréquentiel du signal de contrôle (i) ; et
piloter le convertisseur (410, 420, 430) en vue de compenser l'évolution de la tension du bus (40), le pilotage étant mis en œuvre à partir d'une partie de la composante basse fréquence (i_BF) et d'une partie de la composante haute fréquence (i_HF).

6. Système électrique (4) selon l'une des revendications 1 à 5, comprenant en outre :
un premier générateur (411) de courant alternatif relié au premier convertisseur (410) pour fournir une puissance électrique au premier convertisseur (410), le premier générateur (411) de courant alternatif étant prévu pour être relié à un premier corps rotatif (HP, BP) d'une turbomachine (2) pour prélever une puissance mécanique sur le premier corps rotatif (HP, BP) ; et
un deuxième générateur (421) de courant alternatif relié au deuxième convertisseur (420) pour fournir une puissance électrique au deuxième convertisseur (420), le deuxième générateur (421) de courant alternatif étant prévu pour être relié à un deuxième corps rotatif (HP, BP) d'une turbomachine (2) pour prélever une puissance mécanique sur le deuxième corps rotatif (HP, BP).

7. Système électrique (4) selon la revendication 6, dans lequel le dispositif de contrôle (412, 422, 432, 4000) est configuré pour piloter les convertisseurs (410, 420) en fonction d'une consigne (Cons) de répartition de prélèvement entre les corps rotatifs (HP, BP).

8. Système électrique (4) selon l'une des revendications 6 et 7, dans lequel le dispositif de contrôle (412, 422, 432, 4000) est configuré pour piloter chacun des convertisseurs (410, 420, 430) en fonction d'un seuil (Se1, Se2, Se3) de prélèvement maximal sur chacun des corps rotatifs (HP, BP) et/ou sur la source de courant continu (431).

9. Ensemble pour turbomachine (2) comprenant :
un premier corps rotatif (HP, BP) ;
un deuxième corps rotatif (HP, BP) ; et
un système électrique (4) selon l'une des revendications 5 à 8, dans lequel le premier générateur (411) de courant alternatif est relié au premier corps rotatif (HP, BP) pour prélever une puissance sur le premier corps rotatif (HP, BP) et le deuxième générateur (421) de courant alternatif est relié au deuxième corps rotatif (HP, BP) pour prélever une puissance sur le deuxième corps rotatif (HP, BP).

10. Procédé de contrôle (E) d'un système électrique (4) selon l'une des revendications 1 à 8, le procédé (E) étant mis en œuvre par le dispositif de contrôle (412, 422, 4000) et comprenant :
la réception (E1) d'un signal de contrôle (i) représentatif d'une correction associée à une différence entre une mesure (V) d'une tension du bus (40) et une référence (V_ref), la différence étant représentative d'une évolution d'une tension du bus (40) ;
le filtrage (E2) fréquentiel du signal de contrôle (i) de sorte à en déterminer au moins une composante basse fréquence (i_BF) et une composante haute fréquence (i_HF) ;
le pilotage (E3) du premier convertisseur (410) en vue de compenser l'évolution de la tension du bus (40), le pilotage étant mis en œuvre à partir d'une première partie de la composante basse fréquence (i_BF) et d'une première partie de la composante haute fréquence (i_HF) ; et
le pilotage (E3) du deuxième convertisseur (420) en vue de compenser l'évolution de la tension du bus (40), le pilotage étant mis en œuvre à partir d'une deuxième partie de la composante basse fréquence (i_BF) et d'une deuxième partie de la composante haute fréquence (i_HF).

## Patentansprüche

1. Elektrisches System (4) für ein Turbinentriebwerk (2), umfassend:
einen elektrischen Versorgungsbus (40), der dazu vorgesehen ist, mit mindestens einer Last (400) verbunden zu sein, und dazu konfiguriert ist, der Last (400) eine elektrische Leistung in Form eines Dauersignals bereitzustellen;
einen ersten Wandler (410), der dazu vorgesehen ist, mit einem ersten Wechselstrom-Generator (411) eines Turbinentriebwerks verbunden zu sein, wobei der erste Wandler (410) mit dem Bus (40) verbunden ist und dazu konfiguriert ist, den Bus (40) ausgehend von einer elektrischen Leistung, die von dem ersten Wechselstrom-Generator (411) bereitgestellt wird, spannungsmäßig zu regulieren;
einen zweiten Wandler (420), der dazu vorgesehen ist, mit einem zweiten Wechselstrom-Generator (421) des Turbinentriebwerks verbunden zu sein, wobei der zweite Wandler (420) mit dem Bus (40) verbunden ist und dazu konfiguriert ist, den Bus (40) ausgehend von einer elektrischen Leistung, die von dem zweiten Wechselstrom-Generator (421) bereitgestellt wird, spannungsmäßig zu regulieren; und
eine Kontrollvorrichtung (412, 422, 4000), die mit dem ersten Wandler (410) und dem zweiten Wandler (420) verbunden ist, wobei die Kontrollvorrichtung (412, 422, 4000) konfiguriert ist zum:
Empfangen eines Kontrollsignals (i), das für eine Korrektur repräsentativ ist, die einer Differenz zwischen einer Messung (V) einer Spannung des Busses (40) und einer Referenz (V_ref) zugeordnet ist, wobei die Differenz für eine Entwicklung einer Spannung des Busses (40) repräsentativ ist;
**dadurch gekennzeichnet, dass** die Kontrollvorrichtung konfiguriert ist zum:
Vornehmen einer Frequenzfilterung des Kontrollsignals (i), um daraus mindestens eine niederfrequente Komponente (i_BF) und mindestens eine hochfrequente Komponente (i_HF) zu bestimmen,
Ansteuern des ersten Wandlers (410) mit dem Ziel, die Entwicklung der Spannung des Busses (40) zu kompensieren, wobei das Ansteuern ausgehend von einem ersten Teil der niederfrequenten Komponente (i_BF) und einem ersten Teil der hochfrequenten Komponente (i_HF) umgesetzt wird; und
Ansteuern des zweiten Wandlers (420) mit dem Ziel, die Entwicklung der Spannung des Busses (40) zu kompensieren, wobei das Ansteuern ausgehend von einem zweiten Teil der niederfrequenten Komponente (i_BF) und einem zweiten Teil der hochfrequenten Komponente (i_HF) umgesetzt wird.

2. Elektrisches System (4) nach Anspruch 1, ferner umfassend einen dritten Wandler (430), der dazu vorgesehen ist, mit einer Gleichstrom-Quelle (431) verbunden zu sein, wobei der dritte Wandler (430) mit dem Bus (40) verbunden ist und dazu konfiguriert ist, den Bus (40) ausgehend von einer elektrischen Leistung, die von der Gleichstrom-Quelle (431) bereitgestellt wird, spannungsmäßig zu regulieren, wobei die Kontrollvorrichtung (412, 422, 432, 4000) ferner mit dem dritten Wandler (430) verbunden ist und dazu konfiguriert ist, den dritten Wandler (430) mit dem Ziel, die Entwicklung der Spannung des Busses (40) zu kompensieren, anzusteuern, wobei das Ansteuern ausgehend von einem dritten Teil der niederfrequenten Komponente (i_BF) und einem dritten Teil der hochfrequenten Komponente (i_HF) umgesetzt wird.

3. Elektrisches System (4) nach Anspruch 2, ferner umfassend eine Gleichstrom-Quelle (431), die mit dem dritten Wandler (430) verbunden ist, um dem dritten Wandler (430) eine Leistung bereitzustellen.

4. Elektrisches System (4) nach einem der Ansprüche 1 bis 3, wobei jeder Wandler (410, 420, 430) ein Kontrollorgan (412, 422, 432) umfasst, das dazu konfiguriert ist, den Wandler (410, 420, 430) anzusteuern, wobei die Kontrollvorrichtung (412, 422, 432, 4000) ferner ein Zentralorgan (4000) umfasst, das konfiguriert ist zum:
Empfangen des Kontrollsignals (i);
Vornehmen der Frequenzfilterung des Kontrollsignals (i); und
Übertragen, an jedes der Kontrollorgane, eines Steuersignals (CTRL_1, CTRL_2, CTRL_3) für das Ansteuern der Wandler (410, 420, 430), wobei das Steuersignal (CTRL1, CTRL_2, CTRL_3) aus dem ersten Teil und dem zweiten Teil der niederfrequenten Komponente (i_BF) sowie aus dem ersten Teil und dem zweiten Teil der hochfrequenten Komponente (i_HF) erzeugt wird.

5. Elektrisches System (4) nach einem der Ansprüche 1 bis 3, wobei jeder Wandler (410, 420, 430) ein Kontrollorgan (412, 422, 432) umfasst, das konfiguriert ist zum:
Empfangen des Kontrollsignals (i);
Vornehmen der Frequenzfilterung des Kontrollsignals (i); und
Ansteuern des Wandlers (410, 420, 430) mit dem Ziel, die Entwicklung der Spannung des Busses (40) zu kompensieren, wobei das Ansteuern ausgehend von einem Teil der niederfrequenten Komponente (i_BF) und einem Teil der hochfrequenten Komponente (i_HF) umgesetzt wird.

6. Elektrisches System (4) nach einem der Ansprüche 1 bis 5, ferner umfassend:
einen ersten Wechselstrom-Generator (411), der mit dem ersten Wandler (410) verbunden ist, um dem ersten Wandler (410) eine elektrische Leistung bereitzustellen, wobei der erste Wechselstrom-Generator (411) dazu vorgesehen ist, mit einem ersten Rotationskörper (HP, BP) eines Turbinentriebwerks (2) verbunden zu sein, um eine mechanische Leistung an dem ersten Rotationskörper (HP, BP) abzunehmen; und
einen zweiten Wechselstrom-Generator (421), der mit dem zweiten Wandler (420) verbunden ist, um dem zweiten Wandler (420) eine elektrische Leistung bereitzustellen, wobei der zweite Wechselstrom-Generator (421) dazu vorgesehen ist, mit einem zweiten Rotationskörper (HP, BP) eines Turbinentriebwerks (2) verbunden zu sein, um an dem zweiten Rotationskörper (HP, BP) eine mechanische Leistung abzunehmen.

7. Elektrisches System (4) nach Anspruch 6, wobei die Kontrollvorrichtung (412, 422, 432, 4000) dazu konfiguriert ist, die Wandler (410, 420) in Abhängigkeit von einer Anweisung (Cons) für die Verteilung der Abnahme auf die Rotationskörper (HP, BP) anzusteuern.

8. Elektrisches System (4) nach einem der Ansprüche 6 und 7, wobei die Kontrollvorrichtung (412, 422, 432, 4000) dazu konfiguriert ist, jeden der Wandler (410, 420, 430) in Abhängigkeit von einer Schwelle (Se1, Set, Se3) der maximalen Abnahme an jedem der Rotationskörper (HP, BP) und/oder an der Gleichstrom-Quelle (431) anzusteuern.

9. Anordnung für ein Turbinentriebwerk (2), umfassend:
einen ersten Rotationskörper (HP, BP);
einen zweiten Rotationskörper (HP, BP); und
ein elektrisches System (4) nach einem der Ansprüche 5 bis 8, wobei der erste Wechselstrom-Generator (411) mit dem ersten Rotationskörper (HP, BP) verbunden ist, um eine Leistung an dem ersten Rotationskörper (HP, BP) abzunehmen, und der zweite Wechselstrom-Generator (421) mit dem zweiten Rotationskörper (HP, BP) verbunden ist, um eine Leistung an dem zweiten Rotationskörper (HP, BP) abzunehmen.

10. Verfahren (E) zum Steuern eines elektrischen Systems (4) nach einem der Ansprüche 1 bis 8, wobei das Verfahren (E) von der Kontrollvorrichtung (412, 422, 4000) umgesetzt wird und umfasst:
Empfangen (E1) eines Kontrollsignals (i), das für eine Korrektur repräsentativ ist, die einer Differenz zwischen einer Messung (V) einer Spannung des Busses (40) und einer Referenz (V_ref) zugeordnet ist, wobei die Differenz für eine Entwicklung einer Spannung des Busses (40) repräsentativ ist;
Frequenzfiltern (E2) des Kontrollsignals (i), um daraus mindestens eine niederfrequente Komponente (i_BF) und eine hochfrequente Komponente (i_HF) zu bestimmen;
Ansteuern (E3) des ersten Wandlers (410) mit dem Ziel, die Entwicklung der Spannung des Busses (40) zu kompensieren, wobei das Ansteuern ausgehend von einem ersten Teil der niederfrequenten Komponente (i_BF) und einem ersten Teil der hochfrequenten Komponente (i_HF) umgesetzt wird; und
Ansteuern (E3) des zweiten Wandlers (420) mit dem Ziel, die Entwicklung der Spannung des Busses (40) zu kompensieren, wobei das Ansteuern ausgehend von einem zweiten Teil der niederfrequenten Komponente (i_BF) und einem zweiten Teil der hochfrequenten Komponente (i_HF) umgesetzt wird.

## Claims

1. An electrical system (4) for a gas turbine engine (2), comprising:
a power supply bus (40) provided to be connected to at least one load (400) and configured to provide electrical power to the load (400) in the form of a continuous signal;
a first converter (410) provided to be connected to a first alternating current generator (411) of a gas turbine engine, the first converter (410) being connected to the bus (40) and configured to regulate the voltage of the bus (40) based on an electrical power provided by the first alternating current generator (411);
a second converter (420) provided to be connected to a second alternating current generator (421) of the gas turbine engine, the second converter (420) being connected to the bus (40) and configured to regulate the voltage of the bus (40) based on an electrical power provided by the second alternating current generator (421); and
a monitoring device (412, 422, 4000) connected to the first converter (410) and to the second converter (420), the monitoring device (412, 422, 4000) being configured to:
receive a monitoring signal (i) representative of a correction associated with a difference between a measurement (V) of a voltage of the bus (40) and a reference (V_ref), the difference being representative of a change in a voltage of the bus (40);
**characterized in that** the monitoring device is configured to:
perform frequency filtering of the monitoring signal (i) so as to determine at least one low-frequency component (i_LF) and at least one high-frequency component (i_HF);
pilot the first converter (410) with a view to compensating for the change in the voltage of the bus (40), the piloting being implemented from a first part of the low-frequency component (i_LF) and a first part of the high-frequency component (i_HF); and
pilot the second converter (420) with a view to compensating for the change in the voltage of the bus (40), the piloting being implemented from a second part of the low-frequency component (i_LF) and a second part of the high-frequency component (i_HF).

2. The electrical system (4) according to claim 1, further comprising a third converter (430) provided to be connected to a direct current source (431), the third converter (430) being connected to the bus (40) and configured to regulate the voltage of the bus (40) based on an electrical power provided by the direct current source (431), wherein the monitoring device (412, 422, 432, 4000) is further connected to the third converter (430) and configured to pilot the third converter (430) with a view to compensating for the change in the voltage of the bus (40), the piloting being implemented from a third part of the low-frequency component (i_LF) and a third part of the high-frequency component (i_HF).

3. The electrical system (4) according to claim 2, further comprising a direct current source (431) connected to the third converter (430) to provide power to the third converter (430).

4. The electrical system (4) according to any of claims 1 to 3, wherein each converter (410, 420, 430) comprises a monitoring member (412, 422, 432) configured to pilot the converter (410, 420, 430), the monitoring device (412, 422, 432, 4000) further comprising a central member (4000) configured to:
receive the monitoring signal (i);
perform the frequency filtering of the monitoring signal (i); and
transmit to each of the monitoring members a control signal (CTRL_1, CTRL_2, CTRL_3) for the piloting of the converters (410, 420, 430), the control signal CTRL_1, CTRL_2, CTRL_3) having been generated from the first part and the second part of the low-frequency component (i_LF) as well as from the first part and the second part of the high-frequency component (i_HF).

5. The electrical system (4) according to any of claims 1 to 3, wherein each converter (410, 420, 430) comprises a monitoring member (412, 422, 432) configured to:
receive the monitoring signal (i);
perform the frequency filtering of the monitoring signal (i); and
pilot the converter (410, 420, 430) with a view to compensating for the change in the voltage of the bus (40), the piloting being implemented from part of the low-frequency component (i_LF) and part of the high-frequency component (i_HF).

6. The electrical system (4) according to any of claims 1 to 5, further comprising:
a first alternating current generator (411) connected to the first converter (410) to provide electrical power to the first converter (410), the first alternating current generator (411) being provided to be connected to a first rotating spool (HP, LP) of a gas turbine engine (2) to collect mechanical power from the first rotating spool (HP, LP); and
a second alternating current generator (421) connected to the second converter (420) to provide electrical power to the second converter (420), the second alternating current generator (421) being provided to be connected to a second rotating spool (HP, LP) of a gas turbine engine (2) to collect mechanical power from the second rotating spool (HP, LP).

7. The electrical system (4) according to claim 6, wherein the monitoring device (412, 422, 432, 4000) is configured to pilot the converters (410, 420) as a function of a setpoint (Set) of distribution of the collection between the rotating spools (HP, LP).

8. The electrical system (4) according to any of claims 6 and 7, wherein the monitoring device (412, 422, 432, 4000) is configured to pilot each of the converters (410, 420, 430) as a function of a maximum collection threshold (Thr1, Thr2, Thr3) from each of the rotating spools (HP, LP) and/or from the direct current source (431).

9. A gas turbine engine assembly (2) comprising:
a first rotating spool (HP, LP);
a second rotating spool (HP, LP); and
an electrical system (4) according to any of claims 5 to 8, wherein the first alternating current generator (411) is connected to the first rotating spool (HP, LP) to collect power from the first rotating spool (HP, LP) and the second alternating current generator (421) is connected to the second rotating spool (HP, LP) to collect power from the second rotating spool (HP, LP).

10. A method (E) for monitoring an electrical system (4) according to any of claims 1 to 8, the method (E) being implemented by the monitoring device (412, 422, 4000) and comprising:
receiving (E1) a monitoring signal (i) representative of a correction associated with a difference between a measurement (V) of a voltage of the bus (40) and a reference (V_ref), the difference being representative of a change in a voltage of the bus (40);
frequency filtering (E2) of the monitoring signal (i) so as to determine at least one low-frequency component (i_LF) and one high-frequency component (i_HF);
piloting (E3) the first converter (410) with a view to compensating for the change in the voltage of the bus (40), the piloting being implemented from a first part of the low-frequency component (i_LF) and a first part of the high-frequency component (i_HF); and
piloting (E3) of the second converter (420) with a view to compensating for the change in the voltage of the bus (40), the piloting being implemented from a second part of the low-frequency component (i_LF) and a second part of the high-frequency component (i_HF).
